Europäisches Patentamt

European Patent Office

Office européen des brevets

(19)

(11) Veröffentlichungsnummer: **0 103 119**
**B1**

(12) **EUROPÄISCHE PATENTSCHRIFT**

(45) Veröffentlichungstag der Patentschrift:
11.10.89

(21) Anmeldenummer: 83107293.9

(22) Anmeldetag: 25.07.83

(51) Int. Cl.⁴: **C 04 B 11/28**

(54) Bindemittelgemisch aus sulfatischen, kalkspendenden und aluminatreichen, puzzolanischen Stoffen.

(30) Priorität: 16.08.82 DE 3230406

(43) Veröffentlichungstag der Anmeldung:
21.03.84 Patentblatt 84/12

(45) Bekanntmachung des Hinweises auf die Patenterteilung: 11.10.89 Patentblatt 89/41

(84) Benannte Vertragsstaaten:
AT BE CH DE FR GB IT LI LU NL SE

(56) Entgegenhaltungen:
AT–B– 273 779
DD–A– 140 245
DE–A– 1 811 177
DE–B– 1 187 975
DE–C– 1 241 330
FR–A– 1 338 701

(73) Patentinhaber: FRAUNHOFER-GESELLSCHAFT ZUR FÖRDERUNG DER ANGEWANDTEN FORSCHUNG E.V.
Leonrodstrasse 54
D-8000 München 19 (DE)

(72) Erfinder: Sattler, Heinz, Dr.
Warnowstrasse 6
D-3300 Braunschweig (DE)
Erfinder: Kossatz, Gert, Prof. Dr.
Im Gettelhagen 156
D-3300 Braunschweig (DE)
Erfinder: Lempfer, Karsten, Dr.
Grünbergstrasse 18
D-3300 Braunschweig-Hondelage (DE)

(74) Vertreter: Weber, Otto Ernst, Dipl.-Phys.
Weber & Heim Hofbrunnstrasse 36
D-8000 München 71 (DE)

EP 0 103 119 B1

Jouve, 18, rue St-Denis, 75001 Paris, France

**Beschreibung**

Die Erfindung betrifft ein Verfahren zur Herstellung von Bauteilen, die ihre Manipulierfestigkeit schnell erreichen und eine verbesserte End- und Naßfestigkeit aufweisen, unter Verwendung eines Bindemittelgemisches aus Kalziumsulfat, kalkspendenden Stoffen und puzzolanischen Stoffen.

Es ist aus der DD-A-140 245 und aus der DE-C 12 41 330 bekannt, Bindemittel auf Kalziumsulfat-Basis aus einem Gemisch von Kalziumsulfat, wie z. B. Brandgips, einer kalkspendenden, hydraulischen Komponente, wie z. B. Zement, und einer kalkaufnehmenden puzzolanischen Komponente herzustellen.

Der Erhärtungsprozeß nach dem Anmachen derartiger Bindemittel verläuft dabei wie folgt : In einer Früherhärtungsphase hydratisiert zunächst das Kalziumsulfat oder das Kalziumsulfat-Halbhydrat zu Kalziumsulfat-Dihydrat. In einer zweiten Phase, der hydraulischen Nachhärtung, führen Reaktionen zwischen dem Kalk der hydraulischen Komponente, der Kieselsäure der puzzolanischen Komponente und dem Wasser zur Bildung von wasserbeständigen Kalziumsilikat-Hydraten, die dem Bindemittel eine hohe Festigkeit geben.

Werden jedoch aluminatreiche Puzzolane verwendet, so entstehen durch Reaktionen zwischen dem Gips, dem Zement und den Puzzolanen wasserreiche Kalziumaluminat-Sulfathydrate, wie z. B. Ettringit (Trikalziumaluminattrisulfathydrat), die eine hohe Quellfähigkeit haben und die durch Treibererscheinungen während und nach dem Aushärten des Bindemittels destruktiv auf dessen Volumenstabilität wirken.

Aluminatreiche Puzzolane gelten daher zur Herstellung von Gips/Zement/Puzzolan-Bindemitteln als ungeeignet und praktisch nicht nutzbar.

In der DE-C-12 41 330 wird die Bildung der Kalziumaluminat-Sulfathydrate durch den Einsatz einer kieselsäurereichen puzzolanischen Komponente, wie z. B. Tripel und Diatomeenerde verhindert.

In der DD-140 245 wird die Bildung von Kalziumaluminat-Sulfathydraten unterbunden, indem als puzzolanische Komponente aktivierte, vorzugsweise extraktionsaufbereitete Schichtsilikate verwendet werden.

Der Einsatz seltener, silikatreicher Puzzolane bzw. die Aufbereitung von Puzzolanen ist jedoch sehr kostenaufwendig.

Es ist daher Aufgabe der Erfindung, ein Verfahren der gattungsgemäßen Art anzugeben, das unter Vermeidung vorstehend genannter Nachteile den Einsatz weit verbreiteter aluminatreicher Puzzolane ermöglicht und Bindemittelgemische zu entwickeln, deren Verarbeitungseigenschaften, insbesondere die Frühfestigkeit, vorrangig von der Sulfatkomponente durch die Entstehung von Kalziumsulfatdihydrat und Kalziumaluminat-Sulfathydrat bestimmt werden und deren Anwendungseigenschaften, insbesondere die Endfestigkeit und Wasserbeständigkeit, aber maßgeblich durch die Reaktionsprodukte der kalkspendenden, hydraulischen und der kalkbildenden puzzolanischen Komponente bestimmt werden.

Die Aufgabe wird bei einem Verfahren der gattungsgemäßen Art dadurch gelöst, daß das Bindemittelgemisch aus 50 bis 90 Masse-% Kalziumsulfat, 3 bis 25 Masse-% kalkspendenden Stoffen und einer 5 bis 35 Masse-% kalkbindenden alumosilikatische, aluminatreiche Stoffe enthaltenden Puzzolankomponente besteht, und daß das Mischungsverhältnis von kalkspendenden Stoffen und kalkbindenden aluminisilikatischen, aluminatreichen puzzolanischen Stoffen so eingestellt wird, daß nach einer Erhärtungszeit von sieben Tagen unter den Bedingungen der verhinderten Austrocknung die Längenänderung 0,5 %, gemessen an erhärteten Mörtelprismen, beträgt und danach ein konvergenter Verlauf der Längenänderungszeitkurve festzustellen ist, wodurch die Ettringitbildung auf die Lösungsphase beschränkt bleibt.

Vorteilhafte Weiterbildungen der Erfindung sind Gegenstand der Unteransprüche 2 bis 6.

Die erfindungsgemäße Lösung der Aufgabe hat gegenüber den bekannten Verfahren den Vorteil, daß die Entstehung von Ettringit nicht verhindert, sondern zur Förderung der Festigkeitsausbildung genutzt wird. Das geschieht auf folgende Weise : Da für die Entstehung von Ettringit unter den gegebenen Bedingungen nicht nur das Vorhandensein von Kalk, sondern dessen Konzentrationsverhältnisse entscheidend sind, wird das Mischungsverhältnis der Komponenten des Bindemittels so eingestellt, daß die Ettringit-Bildung auf die flüssige Phase beschränkt bleibt. Hierzu wird die Eigenschaft des Ettringits $(3CaO \cdot Al_2O_3 \cdot 3CaSO_4) \cdot 31H_2O)$, bei seiner Entstehung selbst viel Kalk zu bilden, ausgenutzt. Eine Festigkeitssteigerung wird daher erreicht, wenn die Bindemittel-Zusammensetzung durch die Wahl eines geeigneten Verhältnisses von kalkspendender zu kalkaufnehmender Komponente so eingestellt wird, daß die Kalkkonzentration in der Anfangsphase der Erhärtung die Entstehung von Kalziumaluminat-Sulfathydraten ermöglicht, und daß die Kalkkonzentration im weiteren Erhärtungsverlauf durch die Kalkabsorption des entstehenden Ettringits während der Lösungsphase unterhalb eines noch näher zu bestimmenden Grenzwertes gesenkt wird, so daß die Entstehung destruktiver Kalziumaluminat-Sulfathydrate verhindert wird. Aufgrund des abnehmenden Kalkangebots entstehen im Verlaufe weiterer Erhärtungsreaktionen (im Gegensatz zu den bekannten Lösungen) kalkarme Kalziumaluminat- und Kalziumsilikathydrate. Wenn eine exakte Vorausbestimmung der quantitativen Verhältnisse der reaktionsfähigen Substanzen nicht erfolgen kann, ist (um jedes Risiko in Bezug auf die volumenbeständige Erhärtung auszuschließen) eine gewisse Überdosierung der puzzolanischen Komponente anzuraten. Obwohl auf diese Weise nicht die höchstmöglichen Festigkeitssteigerungen erreicht worden, gelangt man im Vergleich zu nicht modifizierten Gipserzeugnissen immer noch zu beachtlichen Festigkeitssteigerungen. Folgende Ergebnisse, die an Normprüfkörpern eines erfindungsgemäßen Bindemittelgemisches nach Ausführungsbeispiel 1 ermittelt wurden, verdeutlichen das.

Biege- und Druckfestigkeitsentwicklung von Normprismen unter
vergleichbaren Bedingungen bei verhinderter Austrocknung :

| Lagerungs- bzw. Erhärtungszeit | Biegefestigkeit (N/mm²) | | Druckfestigkeit (N/mm²) | |
|---|---|---|---|---|
| | Gips | Gips-Zem.-Puzz. | Gips | Gips-Zem.-Puzz. |
| 2 h | 2,04 | 2,06 | 3,91 | 4,25 |
| 1 d | 2,02 | 1,91 | 2,84 | 4,15 |
| 3 d | 1,83 | 1,92 | 3,50 | 3,94 |
| 7 d | 1,80 | 2,07 | 2,95 | 3,92 |
| 14 d | 1,74 | 1,98 | 2,90 | 5,07 |
| 28 d | 1,80 | 2,45 | 3,11 | 6,23 |

Die Vorausbestimmung der geeigneten Bindemittelzusammensetzung kann durch Messung der zeitlichen Entwicklung der Kalkkonzentration in den entsprechenden Bindemittelsuspensionen oder durch Messung der Längenänderungen an erhärtenden Mörtelprismen erfolgen. Die Messung der Kalkkonzentration, die in der Bindemittelsuspension zu zwei verschiedenen und geeigneten Zeitpunkten $t_1 < t_2$ die noch näher zu bestimmenden maximal zulässigen Kalkkonzentrationswerte $K_1 > K_2$ nicht überschreiten darf, ist etwas aufwendiger, so daß sich in den meisten Fällen die Messung der Längenänderungen als praktischer erweisen wird. In Bezug auf die Längenänderungen unter den Bedingungen verhinderter Austrocknung kann ein erfindungsgemäßes Bindemittelgemisch als raumbeständig erhärtend bezeichnet werden, wenn nach einer Erhärtungszeit von sieben Tagen die maximal zulässige Längenänderung von 0,5 % nicht überschritten wird und danach ein konvergenter Verlauf der Längenänderungszeitkurve festzustellen ist.

Die Bindemittelgemische sind ohne zusätzlichen Energie- und Arbeitsaufwand durch gemeinsames Mahlen der dosierten Komponenten oder getrenntes Mahlen und Mischen herstellbar.

Die Erhärtung derartiger Bindemittelgemische beim Anmachen mit Wasser läuft in zwei zeitlich verschiedenen Phasen ab. Sie beruht in der Anfangsphase auf der Hydratation des Kalziumsulfates zum Kalziumsulfatdihydrat und Kalziumaluminattrisulfathydrat und im Verlauf der hydraulischen Nacherhärtung auf den Reaktionen zwischen dem Kalk der hydraulischen Komponente und den Aluminaten bzw. Silikaten der puzzolanischen Komponente. Da sich die hydraulische Nacherhärtung über einen längeren Zeitraum erstreckt, wird ein Teil des noch vorhandenen freien Wassers als Hydratwasser gebunden, so daß bei Wasser-Bindemittel-Verhältnissen w ≤ 0,45, wie z. B. bei einem Halbtrockenverfahren unter Nutzung von Wasserdepots (vgl. DE-AS 29 19 311), auf eine technische Trocknung des Endproduktes verzichtet werden kann. Bevorzugt werden bei dem erfindungsgemäßen Verfahren natürliche Puzzolane verwendet.

Der Erhärtungsverlauf in der ersten Phase und die elastomechanischen Eigenschaften der Erhärtungsprodukte können durch geeignete Zusätze zum Bindemittelgemisch verändert werden.

Durch die erfindungsgemäßen Bindemittelgemische wird die Herstellung von Bauteilen ermöglicht, die ihre Manipulierfestigkeit schnell erreichen und gegenüber den nicht modifizierten Gipserzeugnissen eine verbesserte End- und Naßfestigkeit aufweisen.

Die Erfindung soll nachstehend an vier Ausführungsbeispielen näher erläutert werden :

### Beispiel 1

Bindemittel, hergestellt durch gemeinsames Mahlen und/oder Mischen, bestehen aus
70 Masseteilen Stuck- und/oder Baugips nach DIN 1168
15 Masseteilen Traßzement nach DIN 1164
15 Masseteilen Traßmehl nach DIN 51 043.

### Beispiel 2

Bindemittel, bestehend aus
70 Masseteilen Stuck- und/oder Baugips nach DIN 1168
12 Masseteilen Portlandzement oder -klinker nach DIN 1164
18 Masseteilen Traßmehl nach DIN 51 043.

Beispiel 3

Bindemittel, bestehend aus
60 Masseteilen Stuck- und/oder Baugips nach DIN 1168
13 Masseteilen Portlandzement nach DIN 1164
27 Masseteilen Traßmehl nach DIN 51 043.

Beispiel 4

Bindemittel, bestehend aus
60 Masseteilen Stuck- und/oder Baugips nach DIN 1168
25 Masseteilen Traßzement nach DIN 1164
15 Masseteilen Traßmehl nach DIN 51 043.

**Patentansprüche**

1. Verfahren zur Herstellung von Bauteilen, die ihre Manipulierfestigkeit schnell erreichen und eine verbesserte End- und Naßfestigkeit aufweisen, unter Verwendung eines Bindemittelgemisches aus Kalziumsulfat, kalkspendenden Stoffen und puzzolanischen Stoffen, dadurch gekennzeichnet, daß das Bindemittelgemisch aus 50 bis 90 Masse-% Kalziumsulfat, 3 bis 25 Masse-% kalkspendenden Stoffen und einer 5 bis 35 Masse-% kalkbindenden alumosilikatische, aluminatreiche Stoffe enthaltenden Puzzolankomponente besteht und daß das Mischungsverhältnis von kalkspendenden Stoffen und kalkbindenden alumosilikatischen, aluminatreichen puzzolanischen Stoffen so eingestellt wird, daß nach einer Erhärtungszeit von sieben Tagen unter den Bedingungen der verhinderten Austrocknung die Längenänderung 0,5 %, gemessen an erhärteten Mörtelprismen, beträgt und danach ein konvergenter Verlauf der Längenänderungszeitkurve festzustellen ist, wodurch die Ettringitbildung auf die Lösungsphase beschränkt bleibt.

2. Verfahren nach Anspruch 1, dadurch gekennzeichnet, daß man ein Bindemittelgemisch verwendet, welches als Sulfatkomponente Stuckgips enthält.

3. Verfahren nach einem der Ansprüche 1 oder 2, dadurch gekennzeichnet, daß man ein Bindemittelgemisch verwendet, welches als kalkspendende Komponente Portlandzement enthält.

4. Verfahren nach einem der Ansprüche 1, 2 oder 3, dadurch gekennzeichnet, daß man ein Bindemittelgemisch verwendet, welches als puzzolanische Komponente Traßmehl enthält.

5. Verfahren nach einem der Ansprüche 1 bis 4, dadurch gekennzeichnet, daß man ein Bindemittelge-misch verwendet, dessen Verarbeitungs- und Anwendungseigenschaften durch Zusatzstoffe modifiziert sind.

6. Verfahren nach einem der Ansprüche 1 bis 5, dadurch gekennzeichnet, daß man während der ersten Phase der zeitlich in zwei Phasen ablaufenden Erhärtung der Bauteile Druck anwendet.

**Claims**

1. Process for the production of components, which are speedily strong enough to handle and which have an improved final and wet strength, using a binder mixture of calcium sulphate, lime-supplying substances and puzzolanic substances, characterized in that the binder mixture comprises 50 to 90 % by weight of calcium sulphate, 3 to 25 % by weight of lime-supplying substances and a puzzolanic component containing 5 to 35 % by weight of lime-binding aluminosilicatic, aluminate-rich substances and that the mixing ratio of the lime-supplying substances and the lime-binding, aluminosilicatic, aluminate-rich puzzolanic substances is adjusted in such a way that following a hardening period of 7 days under the conditions of prevented complete drying the length change is 0.5 %, measured on hardened mortar prisms and subsequently there is a convergent pattern of the length change time curve, so that ettringite formation is limited to the solution phase.

2. Process according to claim 1, characterized in that a binder mixture is used, which contains lumpy gypsum as the sulphate component.

3. Process according to one of the claims 1 or 2, characterized in that a binder mixture is used, which contains Portland cement as the lime-supplying component.

4. Process according to one of the claims 1, 2 or 3, characterized in that a binder mixture is used, which contains powdered trass as the puzzolanic component.

5. Process according to one of the claims 1 to 4, characterized in that a binder mixture is used, whose processing and application characteristics are modified by additives.

6. Process according to one of the claims 1 to 5, characterized in that during the first phase of the hardening of the components takins place in two time phases, pressure is applied.

## Revendications

1. Procédé de préparation de pièces de construction qui deviennent solides rapidement de façon à pouvoir être manipulées et présentent une résistance finale améliorée ainsi qu'une résistance amliorée à l'humidité en utilisant un mélange de liant constitué de sulfate de calcium, de substances libérant de la chaux et des substances pouzzolaniques, caractérisé en ce que le mélange liant est constitué de 50 à 90 % en masse de sulfate de calcium, 3 à 25 % en masse de substance libérant de la chaux et de 5 à 35 % en masse de composants pouzzolane contenant des substances riches en aluminates et aluminosilicates fixant la chaux et que le rapport de mélange des substances libérant la chaux et des substances pouzzolane riches en aluminates et aluminosilicates fixant la chaux est choisi de telle façon, qu'après une durée de durcissement de sept jours, dans des conditions de dessèchement retardé, la variation de largeur de prismes de mortier durci est de 0,5 % et qu'ensuite on constate une convergence de la courbe de modification de largeur, la formation d'éttringite demeurant limitée à la phase solution.

2. Procédé selon la revendication 1, caractérisé en ce qu'on utilise un mélange liant qui comprend du plâtre de moulage comme composant sulfate.

3. Procédé selon l'une des revendications 1 ou 2, caractérisé en ce qu'on utilise un mélange liant qui comprend du ciment Portland comme composant libérant de la chaux.

4. Procédé selon l'une des revendications 1, 2 ou 3, caractérisé en ce qu'on utilise un mélange liant qui comprend comme composant pouzzolane de la poudre de trass.

5. Procédé selon l'une des revendications 1 à 4, caractérisé en ce que l'on utilise un mélange liant dont les propriétés de transformation et d'application sont modifiées par des additifs.

6. Procédé selon l'une des revendications 1 à 5, caractérisé en ce qu'on aplique une pression sur les pièces de construction pendant la première phase du durcissement qui se déroule dans le temps en deux phases.